# NEW EUROPEAN PATENT SPECIFICATION

(11) **EP 1 846 478 B2**
(45) Date of publication and mention of the opposition decision: **08.09.2021**
(45) Mention of the grant of the patent: 24.12.2008
(21) Application number: 06706434.5
(22) Date of filing: 26.01.2006
(51) Int. Cl.: C08G 77/06, C08G 77/08, C08G 77/10, C08J 3/03

(54) **MANUFACTURE OF STABLE LOW PARTICLE SIZE ORGANOPOLYSILOXANE EMULSION**
HERSTELLUNG EINER STABILEN KLEINTEILIGEN ORGANOPOLYSILOXANEMULSION
FABRICATION D'UNE EMULSION D'ORGANOPOLYSILOXANE A DIMENSION DE PARTICULE FAIBLE STABLE

(30) Priority: 02.02.2005 IN KO00632005
(43) Date of publication of application: 24.10.2007
(73) Proprietor: Wacker Chemie AG, 81737 München (DE)
(72) Inventor: PAUL, Amit, Kumar, Guddi Apartment, Flat No. 15, Kolkata 700 008 (IN)
(74) Representative: Deffner-Lehner, Maria
(86) International application number: PCT/EP2006/000690
(87) International publication number: WO 2006/081978

(56) References cited:
- EP-A- 0 755 959
- EP-A2- 0 755 959
- JP-A- H1 171 522
- JP-A- H04 178 429
- US-A- 5 817 714
- US-A- 5 998 537
- US-A1- 2003 143 176
- US-B1- 6 201 063
- US-B1- 6 239 211
- US-B1- 6 245 852

## Description

The present invention relates to a process for making stable high viscosity organopolysiloxane emulsion and in particular to an emulsion-polymerisation process involving a simple and cost-effective faster completion of emulsification of organopolysiloxane and also subsequent polymerisation of the organopolysiloxane. The process is directed to be simple and cost-effective and can be easily adapted for emulsion production of stable organopolysiloxane emulsions for diverse beneficial end use and application. Importantly, the silicone emulsion produced by the process of the invention is in the range of average (i.e D50 value) up to 150 nanometer with a very narrow particle size distribution which is highly stable and found to have advantageous and beneficial diverse use in various end applications including in personal care, textile -, rubber, paper and other like applications/uses.

It is well known to provide organopolysiloxane emulsions with varying particle sizes to suit different end applications.

Organopolysiloxane emulsions having low particle size prepared by emulsion polymerisation process are generally preferred which could provide the desired faster and simple production with focus on emulsion stability and quicker organopolysiloxane polymerisation during emulsification. Such emulsion polymerised products are known to be prepared by various methods. For examples, JP-B 34-2041 disclosed a polymerisation process wherein a strong acid and strong base are used as a polymerisation catalyst. US 3697469 used ion-exchange resin as polymerisation catalyst. US 3360491; US 3697469; US 4228054; US 5726270; US 5817714; US 5895794; US 5925469 and US 6071975 disclosed polymerisation using alkyl benzene sulphonic acid, alkyl naphthalene sulphonic acid, aliphatic sulphonic acid, silylalkyl sulphonic acid, aliphatically substituted diphenyl ether sulfonic acid or alkyl hydrogen sulphates as a catalyst. However all these processes take longer time for polymerisation and completion of the emulsion making process. Most of the processes are also only restricted to cyclosiloxanes.

US 6245852, discloses a process of preparation of organopolysiloxane emulsion having improved stability within a short time. The process comprising the steps of emulsifying and dispersing low molecular weight organopolysiloxane in water in presence of essentially at least one anionic surfactant selected from organic sulphonic acid and organic sulphates by using a high pressure homogeniser with a operating pressure range from 700 to 3000 Kg/cm² and produce an initial emulsion having particle size up to 300 nm, followed by allowing the emulsion for polymerisation and subsequent neutralization of the emulsion at the end.

As would be clearly apparent from the disclosure in US'852 the process necessarily involves the use of very sophisticated and highly capital-intensive machine system for reduction of emulsion time in the emulsion polymerisation process. Also since the process uses a high-pressure system, the emulsion machine needs lot of control system for working safely in the production area.

Thus while the process according to the above US'852 stated to reduce the time of emulsification by using a sophisticated high pressure homogeniser but the said process does not seem to address the requirement for faster completion of the total emulsion process including faster polymerisation. Emulsion polymerisation process usually consists of emulsification of organopolysiloxane and subsequent polymerisation of the organopolysiloxane. So, faster emulsification on its own is not sufficient to complete emulsion polymerisation process or make the process faster. Therefore, it is also important to make faster polymerisation in emulsion polymerisation processes.

The above state of art reveals the need to develop processes of making faster the total emulsion polymerisation process .Also the reduction in the particle size which is found to be of relevance for variety of end use/applications involving a faster emulsion polymerisation process is desirable for wide scale commercial manufacturing and use of such emulsions for diverse applications.

It is thus the basic object of the invention to provide a process of making silicone emulsion having particle size up to 150 nm which would on one hand be simple, cost-effective and fast and on the other hand would provide a simple and cost effective alternative to the need for complex machinery for faster emulsification and also reduce the polymerisation time in the emulsion polymerisation process and thus can be readily adapted for large scale cost-effective commercial manufacture of such low particle size silicone emulsions for diverse applications such as in personnel care.

Another object of the invention is directed to provide a simple process of making silicone emulsion having particle size up to 150 nanometer, which would reduce the total "emulsion polymerisation time" significantly.

Another object of the present invention is directed to a process for the manufacture of silicone emulsion having particle size up to 150 nanometer which would assist faster polymer growth of the organopolysiloxane during emulsion process.

Yet further object of the present invention is directed to making stable silicone emulsion involving standard homogenizer having particle size up to 150 nanometer by way of a selective emulsion formulation and avoiding the need for complex machinery to reduce the emulsification and polymerisation stages in such manufacture of silicone emulsion.

Thus according to the basic aspect of the present invention, there is provided a process for the manufacture of a stable emulsion having particle size (D50 value) up to 150 nanometer comprising:
i) providing a formulation comprising
   (a) organopolysiloxane of the general formula I 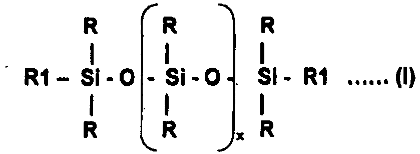
      where R¹ is a hydroxyl group and/or an alcoxy group having 1 to 8 carbon atom and where R, which may differ, is a monovalent hydrocarbon radical,
      x is an integer from 1 to 100,
      or mixtures thereof in an amount of 20 to 80 % by.wt. (b) water in an amount of 5 to 30 % by wt. (c) non-ionic emulsifier(s) having HLB in the range of 10-19 in amounts of 1 to 25% by wt. and (d) anionic emulsifier selected from organic sulfonic acids having HLB in the range of 8-19 in an amount of 1 to 15 % by. wt.;
ii) homogenizing the mix of (i) using standard homogeniser and maintaining a temperature in the range of 10-40°C such as to obtain an organopolysiloxane polymer with viscosity of at least 20000 mPa.s (cps); and
iii) neutralising the emulsion by alkali to a pH range 6-8.

Importantly, it is found by way of the invention that one of the critical aspects which enable obtaining of emulsion up to 150 nanometer following a simple process is the selective use of a combination of non-ionic emulsifier together with an at least one anionic emulsifier to achieve the desired particle sized emulsion. For organopolysiloxane emulsion, HLB value near to 12-15 is found to be the optimum value of the emulsifier or a mixture of emulsifiers, which help to make low particle emulsion. It is also found that a mixture of non-ionic and anionic emulsifiers having HLB value of the mixture near to 12-15 shows optimum combinations to make low particle stable emulsion with a standard homogenizer.

Also the quantity of the emulsifiers used in the above selective formulation have selective contribution to make the emulsion stable. In particular, in the above process of making low particle organopolysiloxane emulsion, the emulsion is also stabilized by use of surfactants having critical HLB values that help to make faster low particle emulsion by using standard homogenizer without need for complex ultra high pressure homogeniser.

Moreover, it is also important to control temperature for achieving low particle size with narrow distribution of the particle. Advantageously making of the emulsion with a temperature up to 50°C, is found to further help faster polymer growth of organopolysiloxane in the emulsion. Temperature during the emulsion preparation is found to have great importance not only to control the particle size but also control the particle size distribution and faster growth of internal phase viscosity.

In the above process of invention, preferably, a suitable biocide is added for preventing microbial growth.

Since, the process uses a mixture of surfactants for making low particle organopolysiloxane by using standard homogenizer, it is important to maintain the selective formulation involving making a proper recipe of surfactants mix and recipe of organopolysiloxane and surfactants to achieve particle size up to 150 nanometer.

Neutralise the emulsion after completion of dilution steps. Generally, water-soluble inorganic alkali hydroxide or organic amine alcohol is used for neutralization. Preferably, sodium hydroxide or potassium hydroxide or triethanol amine is used to neutralise the emulsion.

According to the present invention, one of the critical parameters include the selection of the right emulsifiers and combination of the emulsifiers to achieve the desired low particle size emulsion. The present invention thus achieves producing low particle emulsion in a simple way where selective emulsifier combination and temperature of emulsification and polymerisation which have a critical part to make the process simple and avoiding the use of cost extensive and complex machinery.

The invention thus provides a process for making stable low particle emulsion from a low molecular organopolysiloxane or a mixture of organopolysiloxane. Organopolysiloxanes referred herein for the purpose of the invention include low molecular organopolysiloxane such as alpha omega hydroxy terminated organopolysiloxane; alpha omega alcoxy terminated organopolysiloxane; or mixture thereof.

In case of branched polysiloxane emulsion a tri functional or tetra functional silane or a mixture thereof is used together with above organopolysiloxanes.

Example of R¹ in formula (I) as alkoxy groups are methoxy, ethoxy, propoxy, butoxy, pentoxy, hexoxy or a phenoxy group but not limited to the said groups.

Examples of R in formula (I) are alkyl radicals, such as methyl, ethyl, n-propyl, isopropyl, n-butyl, isobutyl, tertbutyl, n-pentyl, isopentyl, neopentyl, tertpentyl, hexyl such as n-hexyl, heptyl, such as n-heptyl, octyl such as n-octyl and isooctyl such as 2,2,4-trimethyl pentyl, nonyl such as n-nonyl, decyl such as n-decyl, dodecyl such as n-dodecyl, octadecyl such as n-octadecyl; alkenyl such as vinyl and allyl, cycloalkyl such as cyclopentyl, cyclohexyl, cycloheptyl and methyl cyclohexyl, aryl such as phenyl, naphthyl, anthryl and phenanthryl; alkylaryl such as o-, m-, p-tolyl, xylyl and ethylphenyl; aralkyl, such as benzyl, α- and β-phenylethyl, of which methyl, ethyl, n-propyl, isopropyl are preferred and methyl is particularly preferred.

Organopolysiloxane used according to the present invention may be branched by way of incorporation of branching units. Branching units may be introduced to improve the film forming behaviour of organopolysiloxane. Branching unit may be trifunctional silane or tetrafunctional silane or a mixture thereof. Trifunctional silanes (III) and tetrafunctional silanes (IV) have the following structure:

R-Si-(O-R)₃ III

Si-(O-R)₄ IV

Where R, which may differ, is a monovalent hydrocarbon radical. Examples of R are alkyl radicals, such as methyl, ethyl, n-propyl, isopropyl, n-butyl, isobutyl, tert-butyl, n-pentyl, isopentyl, neopentyl, tert-pentyl, hexyl such as n-hexyl, heptyl such as n-heptyl, octyl such as n-octyl and isooctyl such as 2,2,4-trimethyl pentyl, nonyl such as n-nonyl, decyl such as n-decyl, dodecyl such as n-dodecyl, octadecyl such as n-octadecyl; alkenyl such as vinyl and allyl, cycloalkyl, such as cyclopentyl, cyclohexyl, cycloheptyl and methyl cyclohexyl, aryl such as phenyl, naphthyl, anthryl and phenanthryl; alkylaryl, such as o-, m-, p-tolyl, xylyl and ethylphenyl; aralkyl, such as benzyl, α- and β-phenylethyl, of which methyl, ethyl, n-propyl, isopropyl are preferred and methyl is particularly preferred. Depending on the desired requirement of branching of the organopolysiloxane, branching units are adding during the emulsification process. 0.1 to 5% branching units of the emulsion is useful to make an emulsion containing organopolysiloxane having highly branched structure. Quantity used in the emulsion must be controlled carefully, otherwise gellation of the polymer may occur during emulsion process and emulsion destabilizes. If branched polysiloxane is not required, the silane addition is avoided.

According to the present invention, anionic emulsifier has an important role for simple and faster emulsion process of high internal phase viscosity emulsion having particle size up to 150 nm. Anionic surfactant is selected from organic sulfonic acids. Most common sulfonic acids used in the present process are alkyl aryl sulfonic acid; alkyl aryl polyoxyethylene sulphonic acid; alkyl sulfonic acid and alkyl polyoxyethylene sulfonic acid. Structures of sulfonic acids are as below:

R₂C₆H₄SO₃H (V)

R₂C₆H₄O(C2H4O)ₘ SO₃H (VI)

R₂SO₃H (VI)

R₂O(C2H4O)ₘSO₃H (VIII)

Where R₂, which may differ, is a monovalent hydrocarbon radial having at least 6 carbon atoms. Most preferable R₂ groups, but not limited to the following groups, are hexyl, octyl, decyl, dodecyl, cetyl, stearyl, myristyl, and oleyl. 'm' is an integer from 1 to 25. Most preferable anionic surfactants used in the present inventions are octyl benzene sulfonic acid; dodecyl benzene sulfonic acid; cetyl benzene sulfonic acid; alpha octyl sulfonic acid; alpha dodecyl sulfonic acid; alpha cetyl sulfonic acid; polyoxyethylene octyl benzene sulfonic acid; polyoxyethylene dodecyl benzene sulfonic acid; polyoxyethylene cetyl benzene sulfonic acid; polyoxyethylene octyl sulfonic acid; polyoxyethylene dodecyl sulfonic acid and polyoxyethylene cetyl sulfonic acid. Generally, 1 to 15% anionic surfactant is used in the present emulsion processing process. Preferably, 3-10% anionic surfactant is used in the present emulsion to get the optimum result. Anionic surfactant has a dual role in the present emulsion process. Anionic surfactant acts as a condensation/ring opening catalyst in together with as a surfactant for emulsion making. Thus, by using anionic emulsifier, process does not need any catalyst for polymer growth of organopolysiloxane during emulsion process.

It is also observed according to the present invention, at least one additional emulsifier together with anionic emulsifier is essential alongwith the controlled temperature of emulsification and polymerisation for making the emulsion in a simple faster way. It is specially found by way of the present invention that at least one non-ionic emulsifier in together with anionic surfactant helps for faster simple emulsion production. Non-ionic emulsifiers having HLB value in between 10-19 are suitable to make the emulsion process simpler. Most useful surfactants of this category are polyoxyalkylene alkyl ether, polyoxyalkylene alkylphenyl ethers and polyoxyalkylene sorbitan esters. Some useful surfactants having HLB value in between 10-19 are polyethylene glycol octyl ether; polyethylene glycol lauryl ether; polyethylene glycol tridecyl ether; polyethylene glycol cetyl ether; polyethylene glycol stearyl ether; polyethylene glycol nonylphenyl ether; polyethylene glycol dodecylphenyl ether; polyethylene glycol cetylphenyl ether; polyethylene glycol stearylphenyl ether; polyethylene glycol sorbitan mono stearate and polyethylene glycol sorbitan mono oleate. Non-ionic surfactant having HLB value in-between 10-19 has a great importance in the present invention to make process more simpler.

Generally, 1 to 25% nonionic surfactant is used in the emulsion processing process. Preferably, 5-20% nonionic surfactant is used in the present emulsion to get the optimum result. It is well known in the art that Surfactant(s) having HLB value in-between 12-15 is useful to make organopolysiloxane emulsion by using standard homogenizer in shorter period and it is also well known to use a mixture of surfactants that have HLB value in-between 12-15 to get an emulsion of organopolysiloxane having long stability.

According to the present invention, it is also important to provide selective formulation of the emulsifiers in a ratio such that the mix has HLB value preferably in-between 12-15 with at least one anionic surfactant and one non-ionic surfactant in the mixture.

An important aspect in the present emulsion process is the selective use of a mixture of surfactants, which not only make stable emulsion in faster way by using standard homogenizer but also to produce a low particle emulsion up to 150 nm. Particle size of the emulsion is highly dependent on the ratio of anionic and non-ionic emulsifier (s) having HLB value of the mixture in-between 12-15.

It is also well known of the art that polymer growth rate of the orgaopolyisiloxane is also highly dependent on the particle size of the emulsion. So polymer growth rate of the organopolysiloxane during the emulsion process is much higher compared to organopolysiloxane emulsion having particle size above 150 nm.

According to the present invention, the temperature during the emulsion process has an important role to control the particle size of the emulsion, distribution of the particle size distribution (i.e polydispersibility, value 1 is poor and value 0.1 or less than 0.1 is very good) and polymer growth rate of the organopolysiloxane during emulsion process. It is also observed in the present emulsion process, particle size, and distribution of the particle and polymer viscosity become out of control if temperature is not maintained within a selective limit. It is found a significant deviation of final emulsion specifications take place where temperature control is not within the said selective range even though emulsion is produced by using an optimum combination of emulsifiers with a proper combination of fluid to emulsifier. Maintaining a temperature below of 50°C is useful to control the particle size, distribution of particle in the emulsion and polymer growth rate of the organopolysiloxane in the emulsion.

Further, it is also important to control the emulsion temperature during the ageing of the emulsion in case of ultra high (more than 2 million mPa.s (cps)) organopolysiloxane polymer in the emulsion. A temperature below of 30°C is useful to make the polymerisation faster in case of ultra high organopolysiloxane polymer required in the inner phase of the emulsion. Emulsion polymerisation is significantly dropped if temperature is more than 30°C during ageing process, even difficult to achieve ultra high viscosity at high temperature. So, it is clear that faster completion of emulsion process for high organopolysiloxane polymer to ultra high polymer emulsion by emulsion polymerisation process, temperature has great role during the emulsion making process and during the ageing process. So, according to the present process, a combination of mixed emulsifiers having HLB value 12-15 (contains atleast one anionic emulsifier and at least one non-ionic emulsifiers) in together with temperature control during emulsion making and during ageing helps the emulsion process useful to produce emulsion below 150 nm by standard homogenizer.

The components are homogenised by standard homogenizers. Useful standard shear stirring system may be used such as conventional single stage stator-rotor homogeniser or other types of standard homogeniser which are used in the normal homogenising process. Homogenising can be carried out in batch or continuous depend on the design of emulsion process. From the capital investment point of view, it is also clear that the process also needs a economic homogenising system and avoids the use of the expensive very high pressure homogenising system.

Importantly, it is found by way of the present invention that the emulsion obtained following the process of the invention was highly stable. In particular, tests revealed that when the emulsion obtained was put in the oven in the range of 45 to 60°C and most preferably, 55°C for one month, no creaming or separation or deformation in the emulsion was observed. A study of 12 hr freeze/thaw cycles in 10°C/50°C temperature for one month also showed no creaming or separation or deformation in the emulsion.

The details of the invention, its objects and advantages are explained hereunder in greater detail in relation to nonlimiting exemplary illustrations of the process:

### Examples

### Example I

In the emulsion process, transferred 4.5 kg linear alkyl benzene sulfonic acid, 7 kg tridecyl alcohol ethoxylate having HLB value 14, 4.5 kg water in a 100 lit mixing tank having cold water jacket. Mixed the components for 5 min. Added 31.22 kg Wacker PDM siloxane (a 40 mPa.s (Cps) alpha omega hydroxy terminated polydimethyl siloxane) and mixed the component by single stage stator-rotor homogeniser till particle size dropped to 70nm. Mixing was continued for 25 min to reach particle size 70nm. During mixing, temperature of the components were maintained below 30°C. Then, the emulsion was diluted with 30 kg water and the material maintained at temperature below 30°C. Thereafter neutralized the emulsion with 85% triethanol amine and added 4 ppm Kathon CG as a biocide. Total process was completed within one hr.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 1,85,000 mPa.s (Cps).

Emulsion particle size was measured by Malvern Zetasizer Nano - ZS. Result showed 70.3 nm particle size of the emulsion having 0.09 polydispersibility.

### Comparative Example IA

A milky white emulsion was prepared by following Example I except non-ionic surfactant replaced by linear alkyl benzene sulfonic acid. Maintained temperature below 30°C like Example I and completed total emulsification process within one hr. Finally neutralized the emulsion with 85% triethanol amine and added 4 ppm Kathon CG.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 70,000 mPa.s (Cps).

Emulsion particle size was measured by Malvern Zetasizer Nano - ZS. Result showed 168 nm particle size of the emulsion having 0.40 polydispersibility.

The above reveals that due to the use of one emulsifier in the comparative example IA, it was not possible to reach the same particle like example I and higher particle size emulsion in IA compared to I hindered the polymer growth. So, after achieving particle size 168nm even, viscosity of the dimethylpolysiloxane was much less than example I. Also polydispersibility in IA is higher compared to I.

### Comparative Example IB

A milky white emulsion was prepared by following Example I except non-ionic surfactant replaced by linear alkyl benzene sulfonic acid and did not control temperature during the emulsification process. Temperature was increased to 55°C during emulsification process and completed total emulsification process within one hr. Finally neutralized the emulsion with 85% triethanol amine and added 4 ppm Kathon CG.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 8,000 mPa.s (Cps).

Emulsion particle size was measured by Malvern Zetasizer Nano - ZS. Result showed 185 nm particle size of the emulsion having 0.80 polydispersibility.

Since, temperature was not maintained during the emulsification process, it was not possible to achieve the same fluid viscosity and particle size like IA.

### Comparative Example IC

A milky white emulsion was prepared by following Example I except the temperature was not maintained within the selective range during the emulsification process. Temperature was increased to 55°C during emulsification process and completed total emulsification process within one hr. Finally neutralized the emulsion with 85% triethanol amine and added 4 ppm Kathon CG.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 80,000 mPa.s (Cps).

Emulsion particle size was measured by Malvern Zetasizer Nano - ZS. Result showed 125 nm particle size of the emulsion having 0.80 polydispersibility.

Since, temperature was not maintained during the emulsification process, it was not possible to achieve the same fluid viscosity and particle size like I.

### Example II

In the emulsion process, transferred the 3.0 kg linear alkyl benzene sulfonic acid, 3 kg tridecyl alcohol ethoxylate having HLB value 14, 4.5 kg water in a 100 lit mixing tank having cold water jacket. Mixed the components for 5 min. Added 31.22 kg Wacker PDM siloxane (a 40 mPa.s (Cps) alpha omega hydroxy terminated polydimethyl siloxane) and mixed the component by single stage stator-rotor homogeniser till particle size dropped to 117 nm. Mixing was continued for 25 min to reach particle size 117 nm. During mixing, temperature of the components were maintained below 30°C. Add 0.22 kg methyl triethoxy silane and continued the mixing for 10 min. Then, dilute the emulsion with 31 kg water and maintained the material temperature below 30°C. Neutralized the emulsion with 85% triethanol amine and added 4 ppm Kathon CG as a biocide. Total process was completed within one hr.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 8,26,000 mPa.s (Cps).

Emulsion particle size was measured by Malvern Zetasizer Nano - ZS. Result showed 116 nm particle size of the emulsion having 0.03 polydispersibility.

### Comparative Example IIA

A milky white emulsion was prepared by following Example II except non-ionic surfactant replaced by linear alkyl benzene sulfonic acid. Maintained temperature below 30°C like example II and completed total emulsification process within one hr. Finally neutralized the emulsion with 85% triethanol amine and added 4 ppm Kathon CG.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 1,96,000 mPa.s (Cps).

Emulsion particle size was measured by Malvern Zetasizer Nano - ZS. Result showed 185 nm particle size of the emulsion having 0.40 polydispersibility.

Since, under this example (comparative example IIA) only one emulsifier was used, it was not possible to reach the same particle like example II and higher particle size emulsion in IIA in compared to II hindered the polymer growth. So, after achieving particle size 185nm even, viscosity of the dimethylpolysiloxane was much less than example II.

### Comparative Example IIB

A milky white emulsion was prepared by following Example II except non-ionic surfactant replaced by linear alkyl benzene sulfonic acid and did not maintain temperature as per the proposed selective range of the invention during the emulsification process. Temperature was increased to 55°C during emulsification process and completed total emulsification process within one hr. Finally Neutralized the emulsion with 85% triethanol amine and added 4 ppm Kathon CG.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 87,000 mPa.s (Cps).

Emulsion particle size was measured by Malvern Zetasizer Nano - ZS. Result showed 235 nm particle size of the emulsion having 0.70 polydispersibility.

Since, temperature was not maintained during the emulsification process, it was not possible to achieve the same fluid viscosity and particle size like IIA.

### Comparative Example IIC

A milky white emulsion was prepared as in Example II except did not maintain the temperature in the selective range as proposed under the invention during the emulsification process. Temperature was increased to 55°C during emulsification process and completed total emulsification process within one hr.

Finally neutralized the emulsion with 85% triethanol amine and added 4 ppm Kathon CG.

Separated the polymer by adding isopropanol in the emulsion in a ratio 3:1 of isopropanol to emulsion. Drained out the isopropanol layer and washed the fluid layer three times by isopropanol. Dried the polymer in vacuum drier. Viscosity of the polymer was 1,80,000 mPa.s (Cps).

Emulsion particle size was measured by Malvern Zetasizer Nano - ZS. Result showed 140 nm particle size of the emulsion having 0.80 polydispersibility.

Since, temperature was not maintained during the emulsification process,it was not possible to achieve the same fluid viscosity and particle size like II.

### Example III

In the emulsion process, transferred the 4.0 kg linear alkyl benzene sulfonic acid, 7 kg tridecyl alcohol ethoxylate having HLB value 14, 4.5 kg water in a 100 lit mixing tank having cold water jacket. Mixed the components for 5 min. Added 31.22 Kg Wacker PDM siloxane (a 40 mPa.s (Cps) alpha omega hydroxy terminated polydimethyl siloxane) and mixed the component by single stage stator-rotor homogeniser till particle size dropped to 117 nm. Mixing was continued for 25 min to reach particle size 117nm. During mixing, temperature of the components were maintained below 30°C. Add 0.22 gm tetraethyl orthosilicate and continued the mixing for 10 min. Then, dilute the emulsion with 31 kg water and maintained the material temperature below 30°C. Then, kept the emulsion 5 hr below 25°C. Neutralized the emulsion with 85% triethanol amine after 5 hr ageing and added 4 ppm Kathon CG as a biocide. Total process including ageing was completed within six hr.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 45,26,000 mPa.s (Cps).

Emulsion particle size was measured by Malvern Zetasizer Nano - ZS. Result showed 117 nm particle size of the emulsion having 0.09 polydispersibility.

### Comparative Example IIIA

A milky white emulsion was prepared by following Example III except non-ionic surfactant replaced by a mixture of 5.5 kg linear alkyl benzene sulfonic acid and 5.5 kg sodium lauryl sulphate. Maintained temperature below 30°C like example III. Then, kept the emulsion 5 hr below 25°C. Neutralized the emulsion with 85% triethanol amine after 5 hr ageing and added 4 ppm Kathon CG as a biocide. Total process including ageing was completed within six hr.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 7,50,000 mPa.s (Cps).

Emulsion particle size was measured by Malvern Zetasizer Nano - ZS. Result showed 170 nm particle size of the emulsion having 0.50 polydispersibility.

Since, under this comparative example IIIA two anionic emulsifiers were used, it was not possible to reach the same particle like example III and higher particle size emulsion in IIIA compared to III hindered the polymer growth. So, after achieving particle size 170 nm even, viscosity of the dimethylpolysiloxane was much less than example III.

### Comparative Example IIIB

A milky white emulsion was prepared as in Example III except non-ionic surfactant replaced by linear alkyl benzene sulfonic acid and did not maintain temperature during the emulsification process. Temperature was increased to 55°C during emulsification process. Then, kept the emulsion 5 hr at 40-45°C. Neutralized the emulsion with 85% triethanol amine after 5 hr ageing and added 4 ppm Kathon CG as a biocide. Total process including ageing was completed within six hr.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 1,50,000 mPa.s (Cps).

Emulsion particle size was measured by Malvern Zetasizer Nano - ZS. Result showed 230 nm particle size of the emulsion having 0.78 polydispersibility.

Since, temperature was not maintained during the emulsification process, it was not possible to achieve the same fluid viscosity and particle size like IIIA.

### Comparative Example IIIC

A milky white emulsion was prepared by following Example III except did not maintain temperature within the selective range during the emulsification process. Temperature was increased to 55°C during emulsification process. Then, kept the emulsion 5 hr at 40-45°C. neutralized the emulsion with 85% triethanol amine after 5 hr ageing and added 4 ppm Kathon CG as a biocide. Total process including ageing was completed within six hr.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was 9,73,000 mPa.s (Cps).

Emulsion particle size was measured by Malvern Zetasizer NanoZS. Result showed 138 nm particle size of the emulsion having 0.80 polydispersibility.

Since, temperature was not maintained during the emulsification process,it was not possible to achieve the same fluid viscosity and particle size like III.

### Example IV (not according to the invention)

In the emulsion process, transferred the 4.5 kg linear alkyl benzene sulfonic acid, 7 kg tridecyl alcohol ethoxylate having HLB value 14, 4.5 kg water in a 100 lit mixing tank having cold water jacket. Mixed the components for 5 min. Added 31.22 kg decamethylcyclopentasiloxane and mixed the component by single stage stator-rotor homogeniser till particle size dropped to 70nm. Mixing was continued for 25 min to reach particle size 70nm. During mixing, temperature of the components were maintained below 30°C. Then, dilute the emulsion with 30 kg water and maintained the material temperature below 30°C. Neutralized the emulsion with 85% triethanol amine and added 4 ppm Kathon CG as a biocide. Total process was completed within one hr.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was found 1,05,000 mPa.s (Cps).

Emulsion particle size was measured by Malvern Zetasizer Nano - ZS. Result showed 90.5 nm particle size of the emulsion having 0.08 polydispersibility.

### Comparative Example IV A

A milky white emulsion was prepared by following Example IV except non-ionic surfactant replaced by linear alkyl benzene sulfonic acid. Maintained temperature below 30°C like example IV and completed total emulsification process within one hr. Finally neutralized the emulsion with 85% triethanol amine and added 4 ppm Kathon CG.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was found 24,500 mPa.s (Cps).

Emulsion particle size was measured by Malvern Zetasizer Nano - ZS. Result showed 180 nm particle size of the emulsion having 0.30 polydispersibility.

Since, under this comparative example IV A only one emulsifiers was used, it was not possible to reach the same particle like example IV and higher particle size emulsion in IV A compared to IV hindered the polymer growth. So, after achieving particle size 180nm even, viscosity of the dimethylpolysiloxane was much less than example IV.

### Comparative Example IVB

A milky white emulsion was prepared by following Example IV except non-ionic surfactant replaced by linear alkyl benzene sulfonic acid and did not maintain the temperature within the selected range under the invention during the emulsification process. Temperature was increased to 55°C during emulsification process and completed total emulsification process within one hr. Finally neutralized the emulsion with 85% triethanol amine and added 4 ppm Kathon CG.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was found 6,000 mPa.s (Cps).

Emulsion particle size was measured by Malvern Zetasizer Nano - ZS. Result showed 185 nm particle size of the emulsion having 0.80 polydispersibility.

Since, temperature was not maintained during the emulsification process, we were not even able to achieve the same fluid viscosity and particle size like IV A.

### Example IV C (not according to the invention)

A milky white emulsion was prepared by following Example IV except did not maintain temperature as per the selective range proposed under the invention during the emulsification process. Temperature was increased to 55°C during emulsification process and completed total emulsification process within one hr. Finally Neutralized the emulsion with 85% triethanol amine and added 4 ppm Kathon CG.

Separated the polymer by adding isopropanol in the emulsion in a ratio 3:1 of isopropanol to emulsion. Drained out the isopropanol layer and washed the fluid layer three times by isopropanol. Dried the polymer in vacuum oven. Viscosity of the polymer was found 7,000 mPa.s (Cps).

Emulsion particle size was measured by Malvern Zetasizer Nano - ZS. Result showed 148.5 nm particle size of the emulsion having 0.80 polydispersibility.

Since, temperature was not maintained during the emulsification process, it was not possible to achieve the same fluid viscosity and particle size like IV.

Above results clearly demonstrate the findings under the invention that organopolysiloxane emulsion having particle size below is only possible to produce by simple single stage stator-rotor homogeniser when emulsifier mixture comprises at least one anionic emulsifiers and at least one non-ionic emulsifiers. Anionic emulsifiers or a mixture of anionic emulsifier can not produce an organopolysiloxane emulsion below 150 nm by using simple homogeniser. According to the present invention, it is also clearly understood that temperature control during emulsion process has an important role to control the particle size, polydispersibility of the emulsion particles and polymer growth rate. It also observed in the examples that when same recipe followed with out controlling the temperature, emulsion produced in the process had worse result in compare to the emulsion produced with same recipe at controlled temperature during the emulsion process. It is observed that low ageing temperature for ultra high polymer also enhances the polymer growth rate in-compare to ageing at higher temperature. Also the above results further demonstrate that particle size below 150 nm has a substantial influence in the faster organopolysiloxane polymer growth in compare of silicone emulsion having particle size more than 150 nm.

## Claims

1. A process for the manufacture of a stable emulsion having particle size (D50 value) up to 150 nanometer comprising:
i) providing a formulation comprising
(a) organopolysiloxane of the general formula I 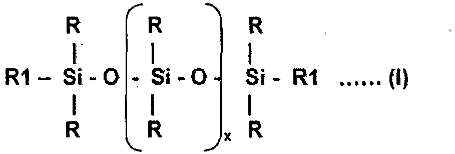
where R¹ is a hydroxyl group and/or an alkoxy group having 1 to 8 carbon atom and where R, which may differ, is a monovalent hydrocarbon radical,
x is an integer from 1 to 100,
or mixtures thereof in an amount of 20 to 80 % by. wt. (b) water in an amount of 5 to 30 % by wt. (c) non-ionic emulsifier(s) having HLB in the range of 10-19 in amounts of 1 to 25% by wt. and (d) anionic emulsifier selected from organic sulfonic acids having HLB in the range of 8-19 in an amount of 1 to 15 % by. wt.;
ii) homogenizing the mix of (i) using any standard homogeniser and maintaining a temperature in the range of 10-40°C such as to obtain an organopolysiloxane polymer with viscosity of at least 20000 mPa.s; and
iii) neutralising the emulsion by alkali to a pH range 6-8.

2. A process for the manufacture of a stable emulsion according to claim 1 wherein the emulsifier or a mixture of emulsifiers used have HLB value preferably in the range of 12-15 for low particle organopolysiloxane emulsion.

3. A process for the manufacture of a stable emulsion according to anyone of claims 1 to 2 wherein for internal oil viscosity of less than 500,000 mPa.s, said neutralizing of the emulsion is carried out immediately after completion of the mixing.

4. A process for the manufacture of a stable emulsion according to anyone of claims 1 to 3 wherein the organopolysiloxanes of formula (I) are alpha omega hydroxy terminated organopolysiloxane; alpha omega alkoxy terminated organopolysiloxane; or mixture thereof.

5. A process for the manufacture of a stable emulsion according to anyone of claims 1 to 4 wherein for branched polysiloxane emulsion a tri functional silane or tetra functional silane or a mixture thereof is used together with the organopolysiloxanes.

6. A process for the manufacture of a stable emulsion according to anyone of claims 1 to 5 wherein the organopolysiloxanes used are branched by way of incorporation of branching units preferably trifunctional silane or tetrafunctional silane or a mixture thereof having the following structure:
R-Si-(O-R)₃ III
Si-(O-R)₄ IV
where R, which may differ, is a monovalent hydro carbon radical.

7. A process for the manufacture of a stable emulsion according to anyone of claims 1 to 6 wherein said anionic emulsifier used are selected from alkyl aryl sulfonic acid; alkyl aryl polyoxyethylene sulphonic acid; alkyl sulfonic acid and alkyl polyoxyethylene sulfonic acid.

8. A process for the manufacture of a stable emulsion according to claim 7 wherein the structures of sulfonic acids used comprise :
R₂C₆H₄SO₃H (V)
R₂C₆H₄O(C2H4O)ₘSO₃H⁻ (VI)
R₂SO₃H (VI)
R₂O(C2H4O)ₘSO₃H (VIII)
Where R₂, which may differ, is a monovalent hydrocarbon radial having at least 6 carbon atom, most preferable R₂ groups are hexyl, octyl, decyl, dodecyl, cetyl, stearyl, myristyl, and oleyl, 'm' is an integer from 1 to 25.

9. A process for the manufacture of a stable emulsion according to anyone of claims 1 to 8 wherein the anionic surfactants are used in amounts of 1-15%, preferably 3-10%, and are selected from octyl benzene sulfonic acid; dodecyl benzene sulfonic acid; cetyl benzene sulfonic acid; alpha octyl sulfonic acid; alpha dodecyl sulfonic acid; alpha cetyl sulfonic acid; polyoxyethylene octyl benzene sulfonic acid; polyoxyethylene dodecyl benzene sulfonic acid; polyoxyethylene cetyl benzene sulfonic acid; polyoxyethylene octyl sulfonic acid; polyoxyethylene dodecyl sulfonic acid and polyoxyethylene cetyl sulfonic acid.

10. A process for the manufacture of a stable emulsion according to anyone of claims 1 to 9 wherein said non-ionic emulsifiers used comprise non-ionic surfactants in an amount of 1 to 25%, preferably 5-20%, and selected from polyoxyalkylene alkyl ether, polyoxyalkylene alkylphenyl ethers and polyoxyalkylene sorbitan esters preferably selected from polyethylene glycol octyl ether; polyethylene glycol lauryl ether; polyethylene glycol tridecyl ether; polyethylene glycol cetyl ether; polyethylene glycol stearyl ether; polyethylene glycol nonylphenyl ether; polyethylene glycol dodecylphenyl ether; polyethylene glycol cetylphenyl ether; polyethylene glycol staerylphenyl ether; polyethylene glycol sorbitan mono stearate and polyethylene glycol sorbitan mono oleate.

## Patentansprüche

1. Verfahren zur Herstellung einer stabilen Emulsion mit einer Teilchengröße (D50-Wert) von bis zu 150 Nanometer, bei dem man:
i) eine Formulierung bereitstellt, die
(a) Organopolysiloxan der allgemeinen Formel I 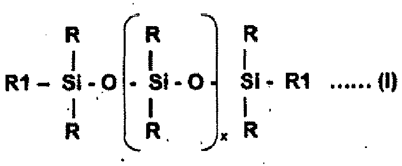
wobei R¹ für eine Hydroxylgruppe und/oder eine Alkoxygruppe mit 1 bis 8 Kohlenstoffatomen steht und R, das verschieden sein kann, für einen einwertigen Kohlenwasserstoffrest steht,
x für eine ganze Zahl von 1 bis 100 steht, oder Mischungen davon in einer Menge von 20 bis 80 Gew.-%, (b) Wasser in einer Menge von 5 bis 30 Gew.-%, (c) einen oder mehrere nichtionische Emulgatoren mit einem HLB-Wert im Bereich von 10-19 in Mengen von 1 bis 25 Gew.-% und (d) anionischen Emulgator, ausgewählt unter organischen Sulfonsäuren mit einem HLB-Wert im Bereich von 8-19, in einer Menge von 1 bis 15 Gew.-% enthält;
ii) die Mischung aus (i) unter Verwendung eines standardmäßigen Homogenisators homogenisiert und eine Temperatur im Bereich von 10-40°C einhält, so daß man ein Organopolysiloxanpolymer mit einer Viskosität von mindestens 20000 mPa.s erhält; und
iii) die Emulsion mit Alkali bis zu einem pH-Bereich von 6-8 neutralisiert.

2. Verfahren zur Herstellung einer stabilen Emulsion nach Anspruch 1, bei dem der Emulgator oder eine Mischung von verwendeten Emulgatoren einen HLB-Wert aufweist, der für eine kleinteilige Organopolysiloxanemulsion vorzugsweise im Bereich von 12-15 liegt.

3. Verfahren zur Herstellung einer stabilen Emulsion nach einem der Ansprüche 1 bis 2, bei dem man für eine Viskosität des internen Öls von weniger als 500.000 mPa.s die Neutralisation der Emulsion sofort nach Beendigung des Mischens durchführt.

4. Verfahren zur Herstellung einer stabilen Emulsion nach einem der Ansprüche 1 bis 3, bei dem es sich bei den Organopolysiloxanen der Formel (I) um alpha,omega-hydroxyterminiertes Organopolysiloxan, alpha,omega-alkoxyterminiertes Organopolysiloxan oder eine Mischung davon handelt.

5. Verfahren zur Herstellung einer stabilen Emulsion nach einem der Ansprüche 1 bis 4, bei dem man für eine Emulsion von verzweigtem Polysiloxan ein trifunktionelles Silan oder tetrafunktionelles Silan oder eine Mischung davon zusammen mit den Organopolysiloxanen verwendet.

6. Verfahren zur Herstellung einer stabilen Emulsion nach einem der Ansprüche 1 bis 5, bei dem man die verwendeten Organopolysiloxane durch Einbau von Verzweigungseinheiten, vorzugsweise trifunktionellem Silan oder tetrafunktionellem Silan oder einer Mischung davon mit der folgenden Struktur:
R-Si-(O-R)₃ III
Si-(O-R)₄ IV
worin R, das verschieden sein kann, für einen einwertigen Kohlenwasserstoffrest steht, verzweigt.

7. Verfahren zur Herstellung einer stabilen Emulsion nach einem der Ansprüche 1 bis 6, bei dem man den verwendeten anionischen Emulgator unter Alkylarylsulfonsäure, Alkylarylpolyoxyethylensulfonsäure, Alkylsulfonsäure und Alkylpolyoxyethylensulfonsäure auswählt.

8. Verfahren zur Herstellung einer stabilen Emulsion nach Anspruch 7, bei dem die Strukturen der verwendeten Sulfonsäuren:
R₂C₆H₄SO₃H (V)
R₂C₆H₄O(C2H4O)ₘSO₃H (VI)
R₂SO₃H (VI)
R₂O(C2H4O)ₘSO₃H (VIII)
wobei R₂, das verschieden sein kann, für einen einwertigen Kohlenwasserstoffrest mit mindestens 6 Kohlenstoffatomen, ganz besonders bevorzugt Hexyl, Octyl, Decyl, Dodecyl, Cetyl, Stearyl, Myristyl und Oleyl steht und "m" für eine ganze Zahl von 1 bis 25 steht, umfassen.

9. Verfahren zur Herstellung einer stabilen Emulsion nach einem der Ansprüche 1 bis 8, bei dem man die anionischen Tenside in Mengen von 1-15%, vorzugsweise 3-10% verwendet und unter Octylbenzolsulfonsäure, Dodecylbenzolsulfonsäure, Cetylbenzolsulfonsäure, alpha-Octylsulfonsäure, alpha-Dodecylsulfonsäure, alpha-Cetylsulfonsäure, Polyoxyethylenoctylbenzolsulfonsäure, Polyoxyethylendodecylbenzolsulfonsäure, Polyoxyethylencetylbenzolsulfonsäure, Polyoxyethylenoctylsulfonsäure, Polyoxyethylendodecylsulfonsäure und Polyoxyethylencetylsulfonsäure auswählt.

10. Verfahren zur Herstellung einer stabilen Emulsion nach einem der Ansprüche 1 bis 9, bei dem die verwendeten nichtionischen Emulgatoren nichtionische Tenside in einer Menge von 1 bis 25%, vorzugsweise 5 bis 20%, ausgewählt unter Polyoxyalkylenalkylether, Polyoxyalkylenalkylphenylethern und Polyoxyalkylensorbitanestern, vorzugsweise ausgewählt unter Polyethylenglykoloctylether, Polyethylenglykollaurylether, Polyethylenglykoltridecylether, Polyethylenglykolcetylether, Polyethylenglykolstearylether, Polyethylenglykolnonylphenylether, Polyethylenglykoldodecylphenylether, Polyethylenglykolcetylphenylether, Polyethylenglykolstearylphenylether, Polyethylenglykolsorbitanmonostearat und Polyethylenglykolsorbitanmonooleat, umfassen.

## Revendications

1. Procédé de fabrication d'une émulsion stable présentant une taille de particule (valeur de D50) allant jusqu'à 150 nanomètres, comprenant les étapes consistant à :
i) procurer une formulation comprenant
(a) un organopolysiloxane de formule générale I 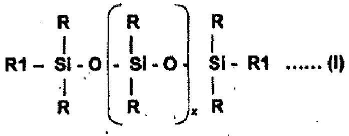
dans laquelle R¹ est un groupe hydroxyle et/ou un groupe alcoxy renfermant de 1 à 8 atomes de carbone, et dans laquelle R, qui peut différer, est un radical hydrocarboné monovalent,
x est un entier de 1 à 100,
ou des mélanges de ceux-ci en une quantité de 20 à 80 % en poids, (b) de l'eau en une quantité de 5 à 30 % en poids, (c) un (des) agent(s) émulsifiant(s) non ionique(s) présentant un HLB dans la plage de 10 à 19 en des quantités de 1 à 25 % en poids, et (d) un agent émulsifiant anionique choisi parmi des acides sulfoniques organiques présentant un HLB dans la plage de 8 à 19 en une quantité de 1 à 15 % en poids ;
ii) homogénéiser le mélange de (i) en utilisant tout homogénéisateur standard et en maintenant une température dans la plage de 10 à 40°C de façon à obtenir un polymère organopolysiloxane présentant une viscosité d'au moins 20000 mPa.s ; et
iii) neutraliser l'émulsion par un alcali jusqu'à une plage de pH de 6 à 8.

2. Procédé de fabrication d'une émulsion stable selon la revendication 1, dans lequel l'agent émulsifiant ou un mélange d'agents émulsifiants utilisé présente une valeur de HLB de préférence dans la plage de 12 à 15 pour l'émulsion d'organopolysiloxane à faible taille de particule.

3. Procédé de fabrication d'une émulsion stable selon l'une quelconque des revendications 1 à 2, dans lequel pour une viscosité d'huile interne inférieure à 500 000 mPa.s, ladite neutralisation de l'émulsion est effectuée immédiatement après l'achèvement du mélangeage.

4. Procédé de fabrication d'une émulsion stable selon l'une quelconque des revendications 1 à 3, dans lequel les organopolysiloxanes de formule (I) sont un organopolysiloxane à terminaison alpha,oméga-hydroxy ; un organopolysiloxane à terminaison alpha,oméga-alcoxy ; ou un mélange de ceux-ci.

5. Procédé de fabrication d'une émulsion stable selon l'une quelconque des revendications 1 à 4, dans lequel pour une émulsion de polysiloxane ramifié, un silane tri-fonctionnel ou un silane tétra-fonctionnel ou un mélange de ceux-ci est utilisé conjointement avec les organopolysiloxanes.

6. Procédé de fabrication d'une émulsion stable selon l'une quelconque des revendications 1 à 5, dans lequel les organopolysiloxanes utilisés sont ramifiés au moyen de l'incorporation de motifs de ramification, de préférence d'un silane tri-fonctionnel ou d'un silane tétra-fonctionnel ou d'un mélange de ceux-ci, présentant la structure suivante :
R-Si-(O-R)₃ III
Si -(O-R)₄ IV
dans laquelle R, qui peut différer, est un radical hydrocarboné monovalent.

7. Procédé de fabrication d'une émulsion stable selon l'une quelconque des revendications 1 à 6, dans lequel lesdits agents émulsifiants anioniques utilisés sont choisis parmi un acide alkylarylsulfonique ; un acide alkylarylpolyoxyéthylènesulfonique ; un acide alkylsulfonique et un acide alkylpolyoxyéthylènesulfonique.

8. Procédé de fabrication d'une émulsion stable selon la revendication 7, dans lequel les structures des acides sulfoniques utilisés comprennent :
R₂C₆H₄SO₃H (V)
R₂C₆H₄O(C2H4O)ₘSO₃H (VI)
R₂SO₃H (VI)
R₂O(C2H4O)ₘSO₃H (VIII)
dans lesquelles R₂, qui peut différer, est un radical hydrocarboné monovalent renfermant au moins 6 atomes de carbone, les groupes R₂ les plus préférables sont un groupe hexyle, un groupe octyle, un groupe décyle, un groupe dodécyle, un groupe cétyle, un groupe stéaryle, un groupe myristyle et un groupe oléyle, 'm' est un entier de 1 à 25.

9. Procédé de fabrication d'une émulsion stable selon l'une quelconque des revendications 1 à 8, dans lequel les agents tensioactifs anioniques sont utilisés en des quantités de 1 à 15 %, de préférence de 3 à 10 %, et sont choisis parmi l'acide octylbenzènesulfonique ; l'acide dodécylbenzènesulfonique ; l'acide cétylbenzènesulfonique ; l'acide alpha-octylsulfonique ; l'acide alpha-dodécylsulfonique ; l'acide alpha-cétylsulfonique ; l'acide polyoxyéthylène-octylbenzènesulfonique ; l'acide polyoxyéthylène-dodécylbenzènesulfonique ; l'acide polyoxyéthylène-cétylbenzènesulfonique ; l'acide polyoxyéthylène-octylsulfonique ; l'acide polyoxyéthylène-dodécylsulfonique et l'acide polyoxyéthylène-cétylsulfonique.

10. Procédé de fabrication d'une émulsion stable selon l'une quelconque des revendications 1 à 9,
dans lequel lesdits agents émulsifiants non ioniques utilisés comprennent des agents tensioactifs non ioniques en une quantité de 1 à 25 %, de préférence de 5 à 20 %, et sont choisis parmi un éther alkylique de polyoxyalkylène, des éthers alkylphényliques de polyoxyalkylène et des esters de polyoxyalkylène-sorbitane, de préférence choisis parmi l'éther octylique de polyéthylèneglycol ; l'éther laurylique de polyéthylèneglycol ; l'éther tridécylique de polyéthylèneglycol ; l'éther cétylique de polyéthylèneglycol ; l'éther stéarylique de polyéthylèneglycol ; l'éther nonylphénylique de polyéthylèneglycol ; l'éther dodécylphénylique de polyéthylèneglycol ; l'éther cétylphénylique de polyéthylèneglycol ; l'éther stéarylphénylique de polyéthylèneglycol ; le monostéarate de polyéthylèneglycol-sorbitane et le mono-oléate de polyéthylèneglycol-sorbitane.
